# EUROPÄISCHE PATENTSCHRIFT

(11) **EP 3 015 302 B1**
(45) Veröffentlichungstag und Bekanntmachung des Hinweises auf die Patenterteilung: **27.03.2019**
(21) Anmeldenummer: 15003126.8
(22) Anmeldetag: 31.10.2015
(51) Int. Cl.: B60K 15/03, B60L 15/20, B62D 39/00, B60W 20/00, B60W 30/18, G05D 1/00, G01F 23/00

(54) **VERFAHREN ZUM BETREIBEN EINER KRAFTSTOFFTANKEINRICHTUNG FÜR EIN KRAFTFAHRZEUG SOWIE ENTSPRECHENDE KRAFTSTOFFTANKEINRICHTUNG**
METHOD FOR OPERATING A FUEL TANK DEVICE FOR A MOTOR VEHICLE AND CORRESPONDING FUEL TANK DEVICE
PROCÉDÉ D'OPÉRATION D'UN DISPOSITIF DE RÉSERVOIR DE CARBURANT DE VÉHICULE AUTOMOBILE ET DISPOSITIF DE RÉSERVOIR DE CARBURANT CORRESPONDANT

(30) Priorität: 03.11.2014 DE 102014016190
(43) Veröffentlichungstag der Anmeldung: 04.05.2016
(73) Patentinhaber: AUDI AG, 85045 Ingolstadt (DE)
(72) Erfinder: Bauer, Florian, DE - 85051 Ingolstadt (DE)

(56) Entgegenhaltungen:
- DE-A1-102004 003 178
- FR-A1- 2 907 212
- US-A1- 2013 019 843

## Beschreibung

Die Erfindung betrifft ein Verfahren zum Betreiben einer Kraftstofftankeinrichtung für ein Kraftfahrzeug, wobei die Kraftstofftankeinrichtung einen Kraftstofftank mit einem Stautopf aufweist, an welchen eine Saugseite einer Kraftstoffpumpe angeschlossen ist, wobei bei einem Füllstand des Kraftstofftanks unterhalb eines bestimmten Minimalfüllstands mittels wenigstens eines Sensors eine geodätische Ausrichtung des Kraftstofftanks ermittelt sowie aus einem Kennfeld anhand der geodätischen Ausrichtung ein Betankungskennwert ausgelesen und mittels einer Signaleinrichtung angezeigt wird. Die Erfindung betrifft weiterhin eine Kraftstofftankeinrichtung.

Die Kraftstofftankeinrichtung ist dem Kraftfahrzeug zugeordnet beziehungsweise bildet einen Bestandteil von diesem. Die Kraftstofftankeinrichtung dient dem Zwischenspeichern von Kraftstoff, welcher beispielsweise zum Durchführen eines Fahrbetriebs des Kraftfahrzeugs, insbesondere unter Verwendung einer Brennkraftmaschine, herangezogen wird. Die Kraftstofftankeinrichtung verfügt über den Kraftstofftank, in welchem der Kraftstoff zwischengespeichert werden kann. Der Kraftstofftank weist den Stautopf auf, welcher vorzugsweise innerhalb des Kraftstofftanks angeordnet ist, insbesondere an einem Boden des Kraftstofftanks.

An den Stautopf ist die Saugseite der Kraftstoffpumpe angeschlossen, welche zum Fördern von Kraftstoff aus dem Kraftstofftank dient. Beispielsweise wird der Kraftstoff mittels der Kraftstoffpumpe in Richtung der Brennkraftmaschine gefördert. Der Stautopf, welcher auch als Schwalltopf bezeichnet werden kann, dient dem Sammeln von Kraftstoff an einer Stelle des Kraftstofftanks, von welcher er mittels der Kraftstoffpumpe entnommen werden soll. Mithilfe des Stautopfs wird insoweit sichergestellt, dass auch bei einer lediglich geringen, in dem Kraftstofftank befindlichen Kraftstoffmenge Kraftstoff entnommen werden kann, insbesondere zum Betreiben der Brennkraftmaschine.

Beispielsweise ist aus der gattungsbildenden Druckschrift DE 10 2004 003 178 A1 ein Kraftfahrzeug mit einer Anzeigevorrichtung für den Füllstand eines Kraftstofftanks des Kraftfahrzeugs bekannt. Mit einer Neigungsinformation des Kraftfahrzeugs und mit einer lokalen Füllhöheninformation des Kraftstofftanks wird durch eine Umrechnungseinheit anhand einer in der Umrechnungseinheit gespeicherten tankspezifischen Füllstandsfunktion der Füllstand des Kraftstofftanks bestimmt und ausgegeben.

Es ist nun Aufgabe der Erfindung, ein Verfahren zum Betreiben einer Kraftstofftankeinrichtung für ein Kraftfahrzeug vorzuschlagen, welches gegenüber dem Stand der Technik Vorteile aufweist, insbesondere ein zuverlässiges Fördern von Kraftstoff aus dem Kraftstofftank nach einem sich an ein vollständiges Entleeren des Kraftstofftanks anschließendes Einfüllen einer vergleichsweise geringen Kraftstoffmenge ermöglicht.

Dies wird erfindungsgemäß mit einem Verfahren mit den Merkmalen des Anspruchs 1 erreicht. Dabei ist vorgesehen, dass in dem Kennfeld für eine Vielzahl von Ausrichtungen des Kraftstofftanks jeweils ein Betankungskennwert hinterlegt ist, der anzeigt, ob bei entsprechender Ausrichtung zumindest ein Mindestanteil einer bestimmten, durch einen Füllstutzen eingeführten Kraftstoffmenge in den Stautopf strömt. Grundsätzlich ist vorgesehen, dass bei einem Füllstand des Kraftstofftanks unterhalb eines bestimmten Minimalfüllstands mittels wenigstens eines Sensors eine geodätische Ausrichtung des Kraftstofftanks ermittelt sowie aus einem Kennfeld anhand der geodätischen Ausrichtung ein Betankungskennwert ausgelesen und mittels einer Signaleinrichtung angezeigt wird.

Für das Kraftfahrzeug ist es wünschenswert, dass auch nach einem weitgehenden Entleeren, insbesondere einem vollständigen Entleeren des Kraftstofftanks bereits nach dem Einfüllen einer im Vergleich zu dem Volumen des Kraftstofftanks geringen Kraftstoffmenge in den Kraftstofftank ein zuverlässiges Entnehmen von Kraftstoff, beispielsweise zum Betreiben der Brennkraftmaschine, möglich ist. Das bedeutet, dass bei dem Einfüllen der geringen Kraftstoffmenge ausreichend Kraftstoff in den Stautopf gelangen muss.

Aus diesem Grund kann ein Einleitrohr vorgesehen sein, über welches eine Strömungsverbindung zwischen einem Füllstutzen und dem Stautopf hergestellt ist. Bei einem Einfüllen von Kraftstoff durch den Füllstutzen strömt nun zumindest ein bestimmter Anteil des Kraftstoffs nicht an einer beliebigen Stelle in den Kraftstofftank ein, sondern wird durch das Einleitrohr in den Stautopf geführt. Dort steht der Kraftstoff nachfolgend zur Verfügung und ermöglicht einen zuverlässigen Betrieb der Kraftstoffpumpe.

Unter bestimmten Umständen kann jedoch das Vorsehen eines derartigen Einleitrohrs nicht gewünscht sein. Das bedeutet jedoch, dass auch ohne ein solches Einleitrohr der Kraftstoff zuverlässig von dem Füllstutzen zu dem Stautopf geführt werden muss, um bereits mit der vorstehend erläuterten geringen Kraftstoffmenge ein zuverlässiges Fördern von Kraftstoff und mithin einen Betrieb der Brennkraftmaschine zu ermöglichen.

Aus diesem Grund ist es vorgesehen, dass bei Vorliegen eines Füllstands des Kraftstofftanks, welcher kleiner ist als der Minimalfüllstand, bestimmte Vorkehrungen getroffen werden. Der Minimalfüllstand kann dabei vorzugsweise einem leeren Kraftstofftank oder einem zumindest nahezu leeren Kraftstofftank entsprechen, wobei in letzterem Fall beispielsweise höchstens 2 %, höchstens 1 %, höchstens 0,5 %, höchstens 0,25 % oder höchstens 0,01 % des Volumens des Kraftstofftanks mit Kraftstoff gefüllt sind. Alternativ oder zusätzlich können die Vorkehrungen auch unter anderen Bedingungen getroffen werden, beispielsweise auf Anforderung durch den Fahrer. Auch ein permanentes Durchführen der Vorkehrungen kann realisiert sein.

Unter den erwähnten Vorkehrungen ist zu verstehen, dass mittels des Sensors die geodätische Ausrichtung des Kraftstofftanks beziehungsweise der Kraftstofftankeinrichtung ermittelt wird. Dabei kann beispielsweise die geodätische Ausrichtung des Kraftfahrzeugs bestimmt und aus dieser auf die Ausrichtung des Kraftstofftanks geschlossen werden. Anschließend wird anhand der geodätischen Ausrichtung der Betankungskennwert bestimmt. Zu diesem Zweck ist das Kennfeld vorgesehen, in welchem vorzugsweise für eine Vielzahl von geodätischen Ausrichtungen jeweils ein Betankungskennwert hinterlegt ist. Insoweit wird bei dem Auslesen die geodätische Ausrichtung als Eingangsgröße für das Kennfeld verwendet, aus welchem sich der Betankungskennwert als Ausgangsgröße ergibt. Der Betankungskennwert oder eine von diesem abgeleitete Größe wird anschließend mittels der Signaleinrichtung angezeigt.

Der Betankungskennwert beschreibt insbesondere, ob bei der momentan vorliegenden geodätischen Ausrichtung des Kraftstofftanks ein erfolgreiches Füllen des Stautopfs bei dem Einfüllen einer bestimmten Kraftstoffmenge in den Kraftstofftank, insbesondere durch den Füllstutzen, zu erwarten ist. Dies wird einem Fahrer des Kraftfahrzeugs mithilfe der Signaleinrichtung signalisiert. Anstelle des Anzeigens mittels der Signaleinrichtung oder zusätzlich zu diesem kann es selbstverständlich vorgesehen sein, dass andere Maßnahmen eingeleitet werden.

Beispielsweise kann es vorgesehen sein, dass, insbesondere nach Aufforderung durch den Fahrer des Kraftfahrzeugs, das Kraftfahrzeug derart betrieben wird, dass sich diejenige geodätische Ausrichtung des Kraftstofftanks einstellt, für welche der Betankungskennwert anzeigt, dass der voraussichtlich in den Stautopf strömende Anteil der durch den Füllstutzen eingefüllten beziehungsweise einzufüllenden Kraftstoffmenge zumindest einem Mindestanteil entspricht. Vorzugsweise wird dazu aus dem Kennfeld die der geodätischen Ausrichtung nächstliegende Betankungsausrichtung ausgelesen, für welche der Betankungskennwert anzeigt, dass der in den Stautopf strömende Anteil größer oder gleich dem Mindestanteil ist.

Zum selbsttätigen Ausrichten des Kraftstofftanks in die Betankungsausrichtung kann ein zumindest teilweiser, insbesondere vollständig autonomer Fahrbetrieb des Kraftfahrzeugs vorgesehen sein. Für dessen Durchführung kann beispielsweise wenigstens ein Umgebungssensor herangezogen werden. Zusätzlich oder alternativ kann ein Fahrwerk des Kraftfahrzeugs, insbesondere wenigstens eine Federeinrichtung oder Stoßdämpfereinrichtung derart eingestellt werden, dass der Kraftstofftank in die Betankungsausrichtung oder zumindest in Richtung der Betankungsausrichtung verlagert wird. Die Federeinrichtung ist dabei beispielsweise als Fluidfeder, insbesondere Luftfeder, ausgebildet. Zum Ausrichten des Kraftstofftanks wird nun vorzugsweise wenigstens ein der Fluidfeder zugeordnetes Ventil angesteuert.

Es ist vorgesehen, dass in dem Kennfeld für eine Vielzahl von Ausrichtungen des Kraftstofftanks jeweils ein Betankungskennwert hinterlegt ist, der anzeigt, ob bei entsprechender Ausrichtung zumindest ein Mindestanteil einer bestimmten, durch einen Füllstutzen eingefüllten Kraftstoffmenge in den Stautopf strömt. Es ist üblicherweise nicht notwendig, dass die gesamte Kraftstoffmenge, die durch den Füllstutzen eingefüllt wird, in den Stautopf strömt und dort nachfolgend zur Verfügung steht. Vielmehr muss dieses lediglich für den Mindestanteil der Kraftstoffmenge der Fall sein. Selbstverständlich kann alternativ jedoch auch die gesamte Kraftstoffmenge gefordert werden, sodass der Mindestanteil gleich 100 % ist.

Der Betankungskennwert, der für jede der hinterlegten Ausrichtungen abgespeichert ist, beschreibt also, ob nach dem Einfüllen der bestimmten Kraftstoffmenge durch den Füllstutzen damit zu rechnen ist, dass der Mindestanteil in den Stautopf strömt und dort nachfolgend zur Verfügung steht. Vorzugsweise ist dies für wenigstens eine der hinterlegten Ausrichtungen der Fall. Besonders bevorzugt ist das Kennfeld auf die bestimmte Kraftstoffmenge abgestimmt, also für diese erzeugt.

Selbstverständlich kann es vorgesehen sein, mehrere Kennfelder für unterschiedliche einzufüllende Kraftstoffmengen bereitzustellen und in Abhängigkeit von der einzufüllenden Kraftstoffmenge das entsprechende Kennfeld auszuwählen und aus diesem in Abhängigkeit von der geodätischen Ausrichtung den Betankungswert auszulesen. Beispielsweise ist es dabei vorgesehen, dass der Fahrer des Kraftfahrzeugs die einzufüllende Kraftstoffmenge vorgibt, also diejenige Kraftstoffmenge, welche er durch den Füllstutzen einzufüllen beabsichtigt. Üblicherweise wird als bestimmte Kraftstoffmenge ein Kraftstoffvolumen von 5 I angenommen, was der Füllmenge eines üblichen Kraftstoffkanisters entspricht.

In einer bevorzugten Ausgestaltung der Erfindung ist vorgesehen, dass die Ausrichtung einen Wankwinkel und/oder einen Nickwinkel umfasst. Unter dem Wankwinkel ist die Auslenkung des Kraftstofftanks um eine Längsachse des Kraftfahrzeugs zu verstehen, während der Nickwinkel eine Auslenkung um eine Querachse bezeichnet. Die Querachse steht dabei senkrecht auf der Längsachse, ist jedoch ebenso wie diese parallel zu einem Untergrund des Kraftfahrzeugs angeordnet. Senkrecht sowohl auf der Längsachse als auch der Querachse steht eine Hochachse des Kraftfahrzeugs. Die geodätische Ausrichtung kann nur entweder den Wankwinkel oder den Nickwinkel oder beide umfassen. In letzterem Fall gibt also das Kennfeld den Betankungskennwert in Abhängigkeit von sowohl dem Wankwinkel als auch dem Nickwinkel an.

Eine Weiterbildung der Erfindung sieht vor, dass mittels der Signaleinrichtung ein optisches und/oder akustisches Signal erzeugt wird. Grundsätzlich kann die Anzeige beliebig erfolgen. Besonders bevorzugt wird der Fahrer jedoch optisch beziehungsweise akustisch auf den Inhalt des Betankungskennwerts aufmerksam gemacht. Beispielsweise erfolgt eine erste Anzeige, wenn der Betankungskennwert andeutet, dass bei der vorliegenden geodätischen Ausrichtung tatsächlich der Mindestanteil in den Stautopf strömt. Ist dies nicht der Fall, so kann beispielsweise eine zweite Anzeige angezeigt werden.

In einer weiteren bevorzugten Ausgestaltung der Erfindung ist vorgesehen, dass ein Betanken des Kraftstofftanks nicht zugelassen wird, insbesondere eine Abdeckung des Füllstutzens des Kraftstofftanks verriegelt wird, wenn der Betankungskennwert anzeigt, dass der Anteil kleiner ist als der Mindestanteil. Wird also für die vorliegende geodätische Ausrichtung des Kraftstofftanks festgestellt, dass die in den Stautopf voraussichtlich einströmende Kraftstoffmenge nicht ausreicht beziehungsweise kleiner ist als die einzufüllende Kraftstoffmenge, so wird das Betanken des Kraftstofftanks nicht zugelassen. Beispielsweise wird der Fahrer zu diesem Zweck an dem Betanken gehindert, beispielsweise durch das Verriegeln der Abdeckung des Füllstutzens. Der Fahrer kann insoweit die Abdeckung nicht zum Betanken des Kraftstofftanks durch den Füllstutzen abnehmen. Das Nichtzulassen des Betankens beziehungsweise das Verriegeln der Abdeckung des Füllstutzens kann als haptische Anzeige angesehen werden, sodass die vorstehend beschriebene Signaleinrichtung zu diesem Zweck herangezogen werden kann.

In einer weiteren Ausgestaltung der Erfindung ist vorgesehen, dass aus dem Kennfeld die der geodätischen Ausrichtung nächstliegende Betankungsausrichtung ausgelesen wird, für welche der Betankungskennwert anzeigt, dass der in den Stautopf strömende Anteil größer oder gleich dem Mindestanteil ist. Es wird insoweit nicht lediglich der der momentanen geodätischen Ausrichtung entsprechende Betankungskennwert ermittelt, sondern zudem diejenige Betankungsausrichtung, für welche das Betanken erfolgreich vorgenommen werden kann. In dieser strömt also bei Vorliegen der ausgelesenen geodätischen Ausrichtung zumindest der Mindestanteil der bestimmten Kraftstoffmenge in den Stautopf. Diese Betankungsausrichtung kann ebenfalls angezeigt werden, beispielsweise mittels der Signaleinrichtung und/oder einer Anzeigeeinrichtung.

Eine Weiterbildung der Erfindung sieht vor, dass zum Bewegen des Kraftfahrzeugs in die Betankungsausrichtung auch bei dem Füllstand, der kleiner als der Minimalfüllstand ist, ein Betrieb einer elektrischen Maschine einer Antriebseinrichtung des Kraftfahrzeugs zugelassen wird, oder dass zum Bewegen des Kraftfahrzeugs in die Betankungsausrichtung ein Antriebsaggregat der Antriebseinrichtung mit einem von dem Kraftstoff verschiedenen Betriebsstoff betrieben wird, oder dass zum Bewegen des Kraftfahrzeugs in die Betankungsausrichtung ein autonomer Fahrbetrieb durchgeführt oder ein Fahrwerk des Kraftfahrzeugs entsprechend eingestellt wird.

Liegt also die geodätische Ausrichtung vor, in welcher das erfolgreiche Betanken nicht durchgeführt werden kann, so wird das Betreiben der Antriebseinrichtung auch bei leerem oder nahezu leerem Kraftstofftank zugelassen. Anderenfalls kann der Betrieb der Antriebseinrichtung, insbesondere der elektrischen Maschine, unterbunden werden. Vorzugsweise wird eine zum Bewegen des Kraftfahrzeugs benötigte Antriebsleistung mittels der elektrischen Maschine bereitgestellt, welche der Antriebseinrichtung zugeordnet ist. Die Antriebseinrichtung kann entsprechend als Hybridantriebseinrichtung vorliegen, also sowohl eine Brennkraftmaschine als auch die elektrische Maschine aufweisen, welche die von der Antriebseinrichtung zum Bewegen des Kraftfahrzeugs bereitgestellte Antriebsleistung wenigstens zeitweise gemeinsam bereitstellen können. Alternativ kann es auch vorgesehen sein, ein Antriebsaggregat zum Bewegen des Kraftfahrzeugs in die Betankungsausrichtung heranzuziehen, das nicht das Vorhandensein des Kraftstoffs, sondern eines von dem Kraftstoff verschiedenen Betriebsstoffs voraussetzt. Der Betriebsstoff kann beispielsweise Gas, insbesondere CNG oder LPG, sein. Selbstverständlich kann auch ein Betrieb desselben Antriebsaggregats, das normalerweise mit dem Kraftstoff betrieben wird, nun mit dem Betriebsstoff vorgenommen werden.

Weiterhin kann es alternativ wie bereits erläutert vorgesehen sein, das Fahrwerk des Kraftfahrzeugs derart einzustellen, dass nachfolgend die Betankungsausrichtung vorliegt. Zu diesem Zweck kann beispielsweise eine Federeinrichtung oder Stoßdämpfereinrichtung des Fahrwerks entsprechend angesteuert werden. Die Federeinrichtung ist beispielsweise als Fluidfeder, insbesondere Luftfeder, ausgebildet.

Eine weitere Ausgestaltung der Erfindung sieht vor, dass der Kraftstofftank einleitrohrlos ausgestaltet ist. Wie bereits vorstehend erläutert, kann es vorgesehen sein, dass zwischen dem Füllstutzen und dem Stautopf das Einleitrohr vorliegt, um sicherzugehen, dass eine ausreichende Menge des Kraftstoffs in den Stautopf gelangt. Dies soll hier jedoch nicht der Fall sein, sodass der Kraftstofftank ohne Einleitrohr ausgestaltet ist und insoweit einleitrohrlos vorliegt.

Schließlich kann in einer weiteren bevorzugten Ausgestaltung der Erfindung vorgesehen sein, dass als Sensor ein Fahrzeugsensor eines Fahrwerks des Kraftfahrzeugs verwendet wird. Der Fahrwerksensor ist dem Fahrwerk des Kraftfahrzeugs zugeordnet. Beispielsweise ist der Fahrwerksensor ein Wegsensor, mittels welchem ein Einfederweg wenigstens einer Stoßdämpferanordnung des Fahrwerks ermittelt werden kann. Selbstverständlich kann als Sensor jedoch auch ein Neigungssensor herangezogen werden, mittels welchem unmittelbar auf den Wankwinkel und/oder den Nickwinkel, insbesondere bezüglich eines Gravitationsvektors, geschlossen werden kann.

Die Erfindung betrifft weiterhin eine Kraftstofftankeinrichtung für ein Kraftfahrzeug, insbesondere zur Durchführung des Verfahrens gemäß den vorstehenden Ausführungen, wobei die Kraftstofftankeinrichtung einen Kraftstofftank mit einem Stautopf aufweist, an welchen eine Saugseite einer Kraftstoffpumpe angeschlossen ist. Dabei ist vorgesehen, dass die Kraftstofftankeinrichtung dazu ausgebildet ist, bei einem Füllstand des Kraftstofftanks unterhalb eines bestimmten Minimalfüllstands mittels wenigstens eines Sensors eine geodätische Ausrichtung des Kraftstofftanks zu ermitteln sowie aus einem Kennfeld anhand der geodätischen Ausrichtung einen Betankungskennwert auszulesen und mittels einer Signaleinrichtung anzuzeigen. Weiterhin ist vorgesehen, dass in dem Kennfeld für eine Vielzahl von Ausrichtungen des Kraftstofftanks jeweils ein Betankungskennwert hinterlegt ist, der anzeigt, ob bei entsprechender Ausrichtung zumindest ein Mindestanteil einer bestimmten, durch einen Füllstutzen eingefüllten Kraftstoffmenge in den Stautopf strömt.

Auf die Vorteile einer derartigen Vorgehensweise beziehungsweise einer derartigen Ausgestaltung der Kraftstofftankeinrichtung wurde bereits eingegangen. Sowohl die Kraftstofftankeinrichtung als auch das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Kraftstofftankeinrichtung für ein Kraftfahrzeug.

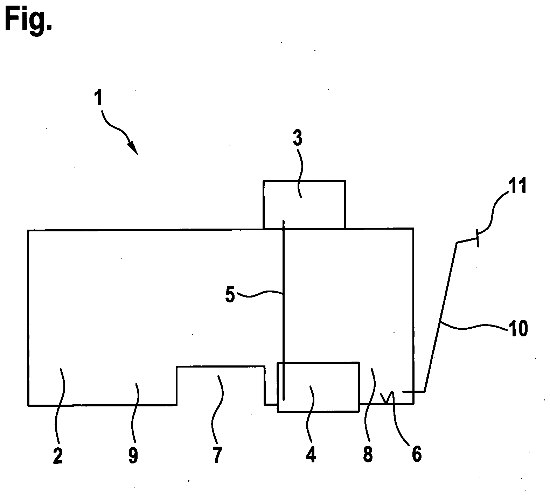

Die Figur 1 zeigt eine schematische Darstellung einer Kraftstofftankeinrichtung 1 für ein nicht näher dargestelltes Kraftfahrzeug. Die Kraftstofftankeinrichtung 1 verfügt über einen Kraftstofftank 2 sowie eine Kraftstoffpumpe 3. Mittels der Kraftstoffpumpe 3 kann Kraftstoff aus dem Kraftstofftank 2, insbesondere aus einem Stautopf 4, gefördert werden. Zu diesem Zweck kann eine Saugleitung 5 vorgesehen sein. Der Stautopf 4 ist bevorzugt an einem Boden 6 des Kraftstofftanks 2 angeordnet. Insbesondere durchgreift er den Boden 6 wenigstens bereichsweise, liegt also zumindest abschnittsweise tiefer als der Boden 6 des Kraftstofftanks 2.

Der Kraftstofftank 2 kann mittels eines Stegs 7 in wenigstens zwei Bereiche 8 und 9 unterteilt sein. Der Stautopf 4 liegt beispielsweise in dem Bereich 8 vor. Der Steg 7 ist derart ausgeführt, dass die Bereiche 8 und 9 bei einer in den Kraftstofftank 2 befindlichen Kraftstoffmenge, welche unterhalb einer bestimmten Kraftstoffmenge liegt, nicht unmittelbar miteinander in Fluidverbindung stehen. Aus diesem Grund kann wenigstens eine Saugstrahlpumpe (hier nicht dargestellt) vorliegen, mittels welcher Kraftstoff aus dem Bereich 9 in den Bereich 8, insbesondere in den Stautopf 4, gefördert wird.

Eine weitere Saugstrahlpumpe kann in dem Bereich 8 vorliegen und dort ebenfalls dazu dienen, Kraftstoff in den Stautopf 4 zu fördern. Die Saugstrahlpumpe beziehungsweise die Saugstrahlpumpen werden vorzugsweise mit Kraftstoff als Treibmittel betrieben, wobei der Kraftstoff der von der Kraftstoffpumpe 3 aus dem Stautopf 4 geförderte Kraftstoff sein kann.

Der Kraftstofftank 2 weist weiterhin einen Füllstutzen 10 auf, welcher mit seinem einen Ende in den Kraftstofftank 2, insbesondere den Bereich 8 des Kraftstofftanks 2, einmündet. Der Füllstutzen 10 mündet dabei beabstandet von dem Stautopf 4 in den Kraftstofftank 2 ein. Auf seiner dem Kraftstofftank 2 abgewandten Seite kann der Füllstutzen 10 zumindest zeitweise mittels einer Abdeckung 11 verschlossen sein. Diese Abdeckung 11 wird entfernt, wenn Kraftstoff durch den Füllstutzen 10 in den Kraftstofftank 2 eingebracht werden soll.

Es ist nun vorgesehen, dass bei einem Füllstand des Kraftstofftanks 2, welcher kleiner ist als ein bestimmter Minimalfüllstand, mittels wenigstens eines Sensors eine geodätische Ausrichtung des Kraftstofftanks 2 zu ermittelt wird. Anschließend soll aus einem Kennfeld anhand der ermittelten geodätischen Ausrichtung ein Betankungskennwert ausgelesen werden. Dieser kann anschließend mittels einer hier nicht dargestellten Signaleinrichtung angezeigt werden. Zusätzlich oder alternativ ist es vorgesehen, die Abdeckung 11 in Abhängigkeit von dem Betankungskennwert entweder zu verriegeln oder freizugeben. Der Minimalfüllstand entspricht vorzugsweise einem nahezu leeren Kraftstofftank 2.

Die beschriebene Vorgehensweise wird insoweit angewandt, wenn der Kraftstofftank 2 nahezu oder weitgehend leer ist. Auch in diesem Zustand soll es möglich sein, durch das Einbringen einer bestimmten Kraftstoffmenge durch den Füllstutzen 10 in den Kraftstofftank 2 ein zuverlässiges Fördern von Kraftstoff aus dem Kraftstofftank 2 mittels der Kraftstoffpumpe 3 sicherzustellen. Der aus dem Kennfeld ausgelesene Betankungskennwert zeigt nun an, ob dies für die momentan vorliegende geodätische Ausrichtung des Kraftstofftanks 2 möglich ist, also ob zumindest ein Mindestanteil der durch den Füllstutzen 10 einzufüllenden oder eingefüllten Kraftstoffmenge in den Stautopf 4 strömt. Die geodätische Ausrichtung kann dabei beispielsweise einen Wankwinkel und/oder einen Nickwinkel umfassen, welche jeweils die Auslenkung um eine bestimmte Achse des Kraftstofftanks 2 beziehungsweise des Kraftfahrzeugs beschreiben.

In Abhängigkeit von dem ausgelesenen Betankungskennwert können geeignete Maßnahmen vorgenommen werden. Beispielsweise wird der Betankungskennwert einem Fahrer des Kraftfahrzeugs mittels einer Signaleinrichtung angezeigt. Zusätzlich oder alternativ kann es vorgesehen sein, dass ein Betanken des Kraftstofftanks nicht zugelassen wird, wenn der Betankungskennwert anzeigt, dass der voraussichtlich durch den Füllstutzen 10 in den Stautopf 4 strömende Anteil an der Kraftstoffmenge kleiner ist als der Mindestanteil. Besonders bevorzugt wird zu diesem Zweck die Abdeckung 11 des Füllstutzens 10 verriegelt, sodass sie nicht zum Betanken abgenommen werden kann.

## Patentansprüche

1. Verfahren zum Betreiben einer Kraftstofftankeinrichtung (1) für ein Kraftfahrzeug, wobei die Kraftstofftankeinrichtung (1) einen Kraftstofftank (2) mit einem Stautopf (4) aufweist, an welchen eine Saugseite einer Kraftstoffpumpe (3) angeschlossen ist, wobei bei einem Füllstand des Kraftstofftanks (2) unterhalb eines bestimmten Minimalfüllstands mittels wenigstens eines Sensors eine geodätische Ausrichtung des Kraftstofftanks (2) ermittelt sowie aus einem Kennfeld anhand der geodätischen Ausrichtung ein Betankungskennwert ausgelesen und mittels einer Signaleinrichtung angezeigt wird, **dadurch gekennzeichnet, dass** in dem Kennfeld für eine Vielzahl von Ausrichtungen des Kraftstofftanks (2) jeweils ein Betankungskennwert hinterlegt ist, der anzeigt, ob bei entsprechender Ausrichtung zumindest ein Mindestanteil einer bestimmten, durch einen Füllstutzen (10) eingefüllten Kraftstoffmenge in den Stautopf (4) strömt.

2. Verfahren nach Anspruch 1, **dadurch gekennzeichnet, dass** die Ausrichtung einen Wankwinkel und/oder einen Nickwinkel umfasst.

3. Verfahren nach einem oder mehreren der vorhergehenden Ansprüche, **dadurch gekennzeichnet, dass** mittels der Signaleinrichtung ein optisches und/oder akustisches Signal erzeugt wird.

4. Verfahren nach einem oder mehreren der vorhergehenden Ansprüche, **dadurch gekennzeichnet, dass** ein Betanken des Kraftstofftanks (2) nicht zugelassen wird, insbesondere eine Abdeckung (11) des Füllstutzens (10) des Kraftstofftanks (2) verriegelt wird, wenn der Betankungskennwert anzeigt, dass der Anteil kleiner ist als der Mindestanteil.

5. Verfahren nach einem oder mehreren der vorhergehenden Ansprüche, **dadurch gekennzeichnet, dass** aus dem Kennfeld die der geodätischen Ausrichtung nächstliegende Betankungsausrichtung ausgelesen wird, für welche der Betankungskennwert anzeigt, dass der in den Stautopf (4) strömende Anteil größer oder gleich dem Mindestanteil ist.

6. Verfahren nach einem oder mehreren der vorhergehenden Ansprüche, **dadurch gekennzeichnet, dass** zum Bewegen des Kraftfahrzeugs in die Betankungsausrichtung auch bei dem Füllstand, der kleiner als der Minimalfüllstand ist, ein Betrieb einer elektrischen Maschine einer Antriebseinrichtung des Kraftfahrzeugs zugelassen wird, oder dass zum Bewegen des Kraftfahrzeugs in die Betankungsausrichtung ein Antriebsaggregat der Antriebseinrichtung mit einem von dem Kraftstoff verschiedenen Betriebsstoff betrieben wird, oder dass zum Bewegen des Kraftfahrzeugs in die Betankungsausrichtung ein autonomer Fahrbetrieb durchgeführt oder ein Fahrwerk des Kraftfahrzeugs entsprechend eingestellt wird.

7. Verfahren nach einem oder mehreren der vorhergehenden Ansprüche, **dadurch gekennzeichnet, dass** der Kraftstofftank (2) einleitrohrlos ausgestaltet ist.

8. Verfahren nach einem oder mehreren der vorhergehenden Ansprüche, **dadurch gekennzeichnet, dass** als Sensor ein Fahrwerksensor eines Fahrwerks des Kraftfahrzeugs verwendet wird.

9. Kraftstofftankeinrichtung (1) für ein Kraftfahrzeug, insbesondere zur Durchführung des Verfahrens nach einem oder mehreren der vorhergehenden Ansprüche, wobei die Kraftstofftankeinrichtung (1) einen Kraftstofftank (2) mit einem Stautopf (4) aufweist, an welchen eine Saugseite einer Kraftstoffpumpe (3) angeschlossen ist, wobei die Kraftstofftankeinrichtung (1) dazu ausgebildet ist, bei einem Füllstand des Kraftstofftanks (2) unterhalb eines bestimmten Minimalfüllstands mittels wenigstens eines Sensors eine geodätische Ausrichtung des Kraftstofftanks (2) zu ermitteln sowie aus einem Kennfeld anhand der geodätischen Ausrichtung einen Betankungskennwert auszulesen und mittels einer Signaleinrichtung anzuzeigen, **dadurch gekennzeichnet, dass** in dem Kennfeld für eine Vielzahl von Ausrichtungen des Kraftstofftanks (2) jeweils ein Betankungskennwert hinterlegt ist, der anzeigt, ob bei entsprechender Ausrichtung zumindest ein Mindestanteil einer bestimmten, durch einen Füllstutzen (10) eingefüllten Kraftstoffmenge in den Stautopf (4) strömt.

## Claims

1. Method for operating a fuel tank device (1) for a motor vehicle, wherein the fuel tank device (1) has a fuel tank (2) having an anti-surge vessel (4) at which a suction side of a fuel pump (3) is connected, wherein at a filling level of the fuel tank (2) below a specified minimum filling level, a geodetic alignment of the fuel tank (2) is detected by means of at least one sensor, and from a characteristic map a fuelling characteristic value is read off on the basis of the geodetic alignment and displayed by means of a signal device, **characterised in that** in the characteristic map, in each case a fuelling characteristic value is stored for a plurality of alignments of the fuel tank (2), which displays whether at a corresponding alignment at least a minimum proportion of a specified quantity of fuel, filled in through a filling nozzle (10), flows into the anti-surge vessel (4).

2. Method according to claim 1, **characterised in that** the alignment comprises a roll angle and/or a pitch angle.

3. Method according to one or several of the preceding claims, **characterised in that** by means of the signal device an optical and/or audible signal is generated.

4. Method according to one or several of the preceding claims, **characterised in that** a fuelling of the fuel tank (2) is not permitted, in particular a cover (11) of the filling nozzle (10) of the fuel tank (2) is locked, when the fuelling characteristic value displays that the proportion is less than the minimum proportion.

5. Method according to one or several of the preceding claims, **characterised in that** from the characteristic map the fuelling alignment is read out which is nearest to the geodetic alignment, for which the fuelling characteristic value displays that the portion flowing into the anti-surge vessel (4) is greater than or equal to the minimum proportion.

6. Method according to one or several of the preceding claims, **characterised in that** for moving the motor vehicle into the fuelling alignment also at the filling level which is less than the minimum filling level, an operation of an electric machine of a drive device of the motor vehicle is permitted, or that for moving the motor vehicle into the fuelling alignment a drive assembly of the drive device is operated with an operating substance different from the fuel, or that for moving the motor vehicle into the fuelling alignment an autonomous driving mode is carried out or a chassis of the motor-vehicle is adjusted accordingly.

7. Method according to one or several of the preceding claims, **characterised in that** the fuel tank (2) is designed without an inlet conduit.

8. Method according to one or several of the preceding claims, **characterised in that** as a sensor a chassis sensor of a chassis of the motor-vehicle is used.

9. Fuel tank device (1) for a motor vehicle, in particular for carrying out the method according to one or several of the preceding claims, wherein the fuel tank device (1) has a fuel tank (2) having an anti-surge vessel (4), at which a suction side of a fuel pump (3) is connected, wherein the fuel tank device (1) is designed, at a filling level of the fuel tank (2) below a specified minimum filling level, to determine by means of at least one sensor a geodetic alignment of the fuel tank (2) and from a characteristic map to read off a fuelling characteristic value on the basis of the geodetic alignment and to display this by means of a signal device, **characterised in that** in the characteristic map, in each case a fuelling characteristic value is stored for a plurality of alignments of the fuel tank (2), which shows whether at a corresponding alignment at least a minimum proportion of a specified quantity of fuel, filled in through a filling nozzle (10), flows into the anti-surge vessel (4).

## Revendications

1. Procédé de fonctionnement d'un dispositif de réservoir de carburant (1) pour un véhicule automobile, dans lequel le dispositif de réservoir de carburant (1) présente un réservoir de carburant (2) avec une réserve (4), auquel un côté d'aspiration d'une pompe à carburant (3) est raccordé, dans lequel en cas de niveau de remplissage du réservoir de carburant (2) sous un niveau de remplissage minimum déterminé une orientation géodésique du réservoir de carburant (2) est déterminée au moyen d'un capteur ainsi qu'une valeur caractéristique de ravitaillement en carburant est lue à partir d'un champ caractéristique à l'aide de l'orientation géodésique et est indiquée au moyen d'un dispositif de signal, **caractérisé en ce que** dans le champ caractéristique pour une pluralité d'orientations du réservoir de carburant (2) respectivement une valeur caractéristique de ravitaillement en carburant est enregistrée, laquelle indique si en cas d'orientation correspondante au moins une part minimale d'une quantité de carburant déterminée remplie par une tubulure de remplissage (10) s'écoule dans la réserve (4).

2. Procédé selon la revendication 1, **caractérisé en ce que** l'orientation comprend un angle de roulis et/ou un angle de tangage.

3. Procédé selon l'une ou plusieurs quelconques des revendications précédentes, **caractérisé en ce qu'**un signal optique et/ou acoustique est généré au moyen du dispositif de signal.

4. Procédé selon l'une ou plusieurs quelconques des revendications précédentes, **caractérisé en ce qu'**un ravitaillement en carburant du réservoir de carburant (2) n'est pas autorisé, en particulier un recouvrement (11) de la tubulure de remplissage (10) du réservoir de carburant (2) est verrouillé lorsque la valeur caractéristique de ravitaillement en carburant indique que la part est inférieure à la part minimum.

5. Procédé selon l'une ou plusieurs quelconques des revendications précédentes, **caractérisé en ce que** l'orientation de ravitaillement en carburant la plus proche de l'orientation géodésique est lue à partir du champ caractéristique, pour laquelle la valeur caractéristique de ravitaillement en carburant indique que la part s'écoulant dans la réserve (4) est supérieure ou égale à la part minimum.

6. Procédé selon l'une ou plusieurs quelconques des revendications précédentes, **caractérisé en ce que** pour le déplacement du véhicule automobile dans l'orientation de ravitaillement en carburant aussi pour le niveau de remplissage qui est inférieur au niveau de remplissage minimum, un fonctionnement d'une machine électrique d'un dispositif d'entraînement du véhicule automobile est autorisé, ou que pour le déplacement du véhicule automobile dans l'orientation de ravitaillement en carburant un groupe d'entraînement du dispositif d'entraînement fonctionne avec un carburant différent du carburant, ou que pour le déplacement du véhicule automobile dans l'orientation de ravitaillement en carburant un mode de déplacement autonome est réalisé ou un train de roulement du véhicule automobile est réglé de manière correspondante.

7. Procédé selon l'une ou plusieurs quelconques des revendications précédentes, **caractérisé en ce que** le réservoir de carburant (2) est configuré sans tube d'introduction.

8. Procédé selon l'une ou plusieurs quelconques des revendications précédentes, **caractérisé en ce qu'**un capteur de train de roulement d'un train de roulement du véhicule automobile est utilisé comme capteur.

9. Dispositif de réservoir de carburant (1) pour un véhicule automobile, en particulier pour la réalisation du procédé selon l'une ou plusieurs quelconques des revendications précédentes, dans lequel le dispositif de réservoir de carburant (1) présente un réservoir de carburant (2) avec une réserve (4), auquel un côté d'aspiration d'une pompe de carburant (3) est raccordé, dans lequel le dispositif de réservoir de carburant (1) est réalisé afin de déterminer en cas de niveau de remplissage du réservoir de carburant (2) sous un niveau de remplissage minimum déterminé au moyen d'au moins un capteur une orientation géodésique du réservoir de carburant (2) ainsi que de lire à partir d'un champ caractéristique au moyen de l'orientation géodésique et d'indiquer au moyen d'un dispositif de signal une valeur caractéristique de ravitaillement en carburant, **caractérisé en ce que** dans le champ caractéristique pour une pluralité d'orientations du réservoir de carburant (2) respectivement une valeur caractéristique de ravitaillement en carburant est enregistrée, laquelle indique si en cas d'orientation correspondante au moins une part minimale d'une quantité de carburant remplie par une tubulure de remplissage (10) déterminée s'écoule dans la réserve (4).
